# EUROPÄISCHE PATENTSCHRIFT

(11) **EP 0 809 162 B1**
(45) Veröffentlichungstag und Bekanntmachung des Hinweises auf die Patenterteilung: **25.10.2000**
(21) Anmeldenummer: 97109214.3
(22) Anmeldetag: 06.06.1997
(51) Int. Cl.: G05B 17/02

(54) **Verfahren zur Prozesssteuerung und Gerätesteuersystem**
Method and system for device control
Méthode et dispositif de commande d'appareil

(43) Veröffentlichungstag der Anmeldung: 26.11.1997
(73) Patentinhaber: Tanner, Christoph H., 4056 Basel (CH)
(72) Erfinder: Tanner, Christoph H., 4056 Basel (CH); Beck, Daniel M., 4056 Basel (CH)
(74) Vertreter: Troesch Scheidegger Werner AG

(56) Entgegenhaltungen:
- DE-A- 4 338 615
- FR-A- 2 713 791
- GB-A- 2 284 906
- COREA R ET AL: "QUALITATIVE MODELLING-AN APPLICATION TO SUPERVISORY CONTROL OF A DISTILLATION COLUMN" PROCEEDINGS OF THE INTERNATIONAL SYMPOSIUM ON INTELLIGENT CONTROL, GLASGOW, AUG. 11 - 13, 1992, 11.August 1992, INSTITUTE OF ELECTRICAL AND ELECTRONICS ENGINEERS, Seiten 586-591, XP000340558
- BOURJIJ A ET AL: "ON THE USE OF HYBRID PETRI NETS FOR CONTROL PROCESS SAFETY: APPLICATION TO A STEAM-BOILERS NETWORK SIMULATOR" PROCEEDINGS OF THE INTERNATIONAL CONFERENCE ON SYSTEMS, MAN AND CYBERNETICS, LE TOUQUET, OCT. 17 - 20, 1993, Bd. 2, 17.Oktober 1993, INSTITUTE OF ELECTRICAL AND ELECTRONICS ENGINEERS, Seiten 197-202, XP000448999

## Beschreibung

Die vorliegende Erfindung betrifft ein Verfahren nach Anspruch 1 sowie ein Gerätesteuersystem nach Anspruch 8.

### Definition

### 1. Technischer Prozess

Unter einem technischen Prozess an einem Gerät wird die Generierung einer physikalischen Grösse verstanden, welche, als abhängige Variable, von einer oder mehreren unabhängigen Variablen abhängig ist. Prozesseinheiten sind Geräte, welche erlauben, in Funktion der genannten unabhängigen Variablen, die ihnen als Steuergrössen eingegeben werden, die Ausgangsgrösse als abhängige Variable zu beeinflussen. Ohne jeglichen Anspruch auf Vollständigkeit finden sich mithin technische Prozesse an Geräten, beispielsweise für das Erzeugen und Stellen einer Raumtemperatur, der Luftfeuchtigkeit, der Fenster- oder Jalousienstellung, Durchflussvorgaben etc.

### 2. Modellierung eines Gerätes

Wir verstehen unter der Modellierung eines Gerätes eine oder eine Schar von Charakteristiken, welche den Verlauf einer oder mehrerer abhängiger Variablen am Geräte-Prozess, wie erwähnt beispielsweise der Temperatur, elektrisch nachbilden, in Funktion elektrischer Signale, welche die unabhängigen, extern eingegebenen Variablen festlegen.

Aus der DE-A 43 38 615 ist es bekannt, an einem zu modellierenden, komplexen Prozess Teilaspekte in Teilmodellen zu beschreiben, wobei das Zusammenwirken der betrachteten Teilaspekte des Prozesses durch ein übergeordnetes, die Teilmodelle miteinander verknüpfendes Modell beschrieben wird.

Teilmodelle einer Walzstrasse wie z.B. ein Verschleissmodell, ein Temperaturmodell, ein Biegemodell lassen sich nur abschätzen. Ihre anfänglichen Fehler werden mittels eines neuronalen Netzwerkes, aufgrund von Messungen während des Prozessablaufs, adaptiv korrigiert.

In Corea R. et al.: "Qualitative Modelling - an Application to Supervisory Control of a Distillation Column", Proceedings of the International Symposium on Intelligent Control, Glasgow, Aug. 11 - 13, 1992; 11. August 1992, IEEE, Seiten 586 - 591, ist der Zusammenhang zwischen Prozesszuständen, die sich beeinflussen, anhand einer Zeigerdarstellung beschrieben.

Es sind Verfahren zur Steuerung einer Mehrzahl von Geräten bekannt. Je nach Konstellation und Vielzahl vorgesehener Einzelgeräte an einem Gesamtsystem, sind solche Verfahren äusserst komplex und in ihrer Installation teuer, weil üblicherweise ein zentral vorgesehenes Steuersystem eingesetzt wird und für jede Anwendung gesamthaft zu konstellieren ist.

Es ist Aufgabe der vorliegenden Erfindung, ein solches gerätebezogenes Verfahren bzw. ein solches System vorzuschlagen, mit welchem erreicht wird:
- die Möglichkeit, in dem Sinne modular das Verfahren bzw. das System höchst flexibel an ein weites Spektrum verschiedener Gerätekonstellationen anzupassen, so dass sich im wesentlichen, für unterschiedliche Konstellationen, die Systeme nur in unterschiedlicher Zahl vorgesehener Hardwaremodule unterscheiden;
- dass für Geräte, welche lokal weit auseinander liegen, der Verkablungsaufwand wesentlich reduziert werden kann, wodurch nebst den hierzu notwendigen baulichen Aufwendungen auch die Störanfälligkeit reduziert wird;
- dass mit einfachen Mitteln die Vornahme der Gerätesteuerung von lokal verschiedensten Orten aus vorgenommen werden kann.

Zu diesem Zweck wird das erfindungsgemässe Verfahren nach Anspruch 1, mit bevorzugten Ausführungsformen gemäss den Ansprüchen 2 bis 7 vorgeschlagen, das Gerätesteuersystem nach Anspruch 8 mit bevorzugten Ausführungsformen gemäss den Ansprüchen 9 bis 11.

Dadurch, dass den Geräten, worunter im weiteren auch eine Gruppe einheitlich zu behandelnder Geräte verstanden sei, eine elektrische Geräte-Modellierungseinheit jeweils zugeordnet wird, ergibt sich der Vorteil, dass Hardware-mässig jedem Gerät eine gleiche solche Einheit zugeordnet werden kann und lokal daran angebunden werden kann. Lediglich durch Eingabe der für das jeweilige Gerät charakteristischen Funktionen und unabhängigen Grössen werden diese Modellierungseinheiten an die jeweiligen Prozesse angepasst.

Soll der Zustand - die unabhängige Variable - eines Gerätes als technischer Prozess von demjenigen oder von denjenigen anderer Geräte abhängig gemacht werden, wie beispielsweise eine Storenstellung vom öffnungsgrad des zugeordneten Fensters, dann wird durch Abspeicherung derjenigen Geräteadressen, von denen ein betrachtetes Gerät abhängig sein soll, eine direkte Abfrage der Gerätezustände zwischen den Modellierungseinheiten ermöglicht, ohne dass hierfür eine zentrale Adress- und Datenvermittlungsstelle zwischenzuschalten wäre. Damit kann auch der notwendige Verdrahtungsaufwand auf ein Minimum reduziert werden, verglichen mit einem zentralen, sternförmigen System. Zur Vornahme bzw. Eingabe der Steuerbefehle ist eine Eingabeeinheit vorgesehen, welche über eine Vermittlungsstelle bzw. Vermittlungseinheit, ähnlich wie in der Telefonie, eingabeentsprechend und über Adressierung die eingegebenen Befehle an die erwünschten Teilnehmer, d.h. Modellierungseinheiten, weiterleitet. Dem Dezentralisierungs-Bestreben gemäss vorliegender Erfindung aber konsequent folgend, werden vorzugsweise Vermittlungseinheiten dezentral jeder vorgesehenen Eingabeeinheit zugeordnet. Es wird in beiden Fällen möglich, der Analogie bezüglich Telefonie folgend, als weitere "Abonnenten" mehrere Eingabeeinheiten vorzusehen, um über deren Adressdefinition und die Adressen der vorgesehenen Modellierungseinheiten Steuerbefehle und Anfragen von den Eingabeneinheiten zu den Modellierungseinheite bzw. Rückmeldungen von letzteren zu den Eingabeeinheiten zu vermitteln.

Die Erfindung wird anschliessend beispielsweise anhand einer Figur erläutert. Diese zeigt in Form eines vereinfachten Signalfluss/Funktionsblockdiagrammes den prinzipiellen Aufbau des erfindungsgemässen und nach dem erfindungsgemässen Verfahren arbeitenden Gerätesteuersystems.

Gemäss der vereinfachten Darstellung der erwähnten Figur sind Geräte als technische Prozesseinheiten 1₁ bis 1ₙ, beispielsweise 1₁ bis 1₄, vorgesehen, beispielsweise in Form eines motorischen Antriebes 1₁, eines Durchfluss-Steuerventils 1₂, eines Klappenantriebes 1₃, eines elektronischen Gerätes 1₄ etc. Die durch die erwähnten Geräte 1ₙ bewirkten physikalischen Grössen - als abhängige Variablen - wie Antriebsweg, Durchflusseinstellung, Klappenstellung, Strom, sind mit Aₙ bezeichnet. Es sind die Geräte-Ausgangsgrössen Aₙ von unabhängigen Variablen abhängig, so beispielsweise am erwähnten motorischen Antrieb von der Umgebungstemperatur ϑ, von der Tageszeit T, zusätzlich aber beispielsweise von der Stellung des Durchflussventiles am Gerät 1₂ und der Klappe am Gerät 1₃. Analoges gilt für die weiteren vorgesehenen Geräte, deren Ausgangsgrössen Aₙ in Abhängigkeit von unabhängigen Variablen zu stellen sind.

Den Geräten 1ₙ sind Modellierungseinheiten 3₁ bis 3ₙ, im dargestellten Beispiel 3₁ bis 3₄, unmittelbar zugeordnet. Diese Einheiten bilden die Ausgangsgrössen Aₙ in Funktion der abhängigen Variablen als Signale A_{nM} nach. An den Modellierungseinheiten 3ₙ werden einerseits von gerätezugeordneten Messfühlern 5ₙ, sofern notwendig und vorgesehen, spezifisch den jeweiligen Geräten 1ₙ zugeordnete Grössen, wie Umgebungstemperatur ϑ, eingegeben. Weitere unabhängige Variablen werden in noch zu beschreibender Art und Weise, auch als Steuersignale, von einer oder mehreren Eingabeeinheiten 7ₘ eingegeben bzw. werden durch die jeweiligen momentanen Zustände eines oder mehrerer der weiteren vorgesehenen Geräte 1ₙ bestimmt.

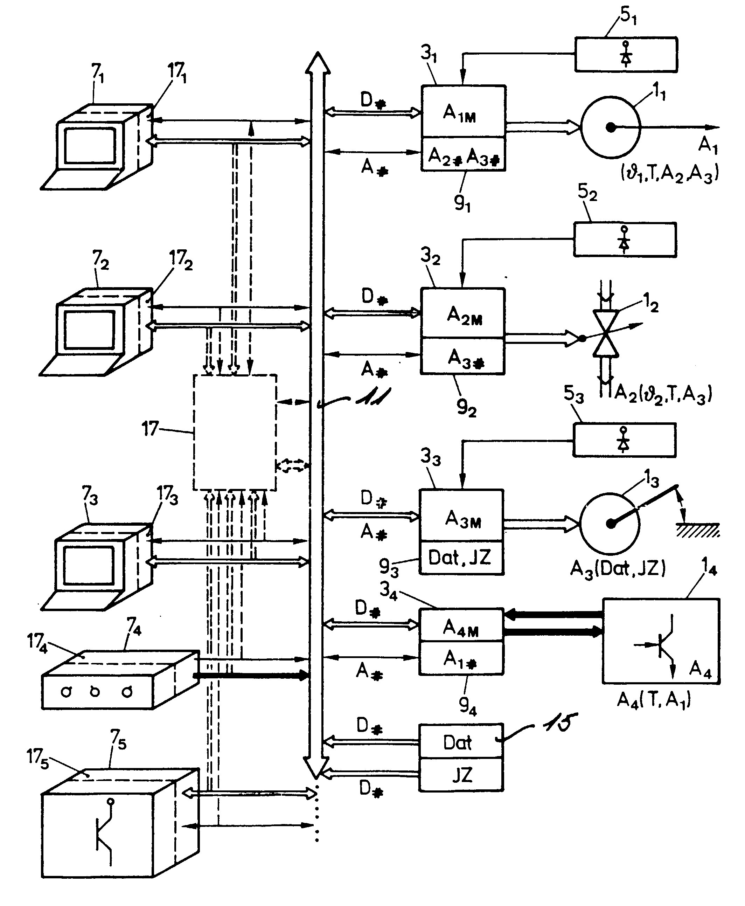

Gemäss Darstellung in der Figur bildet der Stellzustand A des Gerätes 1₂ sowie 1₃ jeweils eine weitere unabhängige Variable für die Bestimmung des Stellzustandes des Gerätes 1₁. Jede der Modellierungseinheiten 3ₙ weist eine Adressspeichereinheit 9ₙ auf, worin, bei Konstellierung des Gesamtsystems, die Adressen A_{n#} derjenigen Geräte bzw. Modellierungseinheiten 3ₙ eingegeben werden, von denen ein betrachtetes Gerät 1ₙ abhängen soll. So sind bei der Konstellation gemäss Darstellung an der Modellierungseinheit 3₁ bzw. dem zugeordneten Adressspeicher 9₁ die Adressen A₂# und A₃# der Modellierungseinheiten 3₂ bzw. 3₃ abgelegt.

In den Modellierungseinheiten 3ₙ ist, wie erwähnt, die Geräteausgangsgrösse Aₙ elektrisch und in Funktion der erwähnten unabhängigen Variablen nachgebildet, was durch Eingabe der entsprechenden Kurven bzw. Kurvenscharen an Funktionsgeneratoren und/oder an Tabellen bei der System-Konstellation erfolgt.

Zwischen den Gerätemodellierungseinheiten 3ₙ erfolgt die gegenseitige Adressierung zur Abfrage momentaner Zustände und die entsprechende Datenübermittlung über einen in der Figur schematisch dargestellten Adressierungs- und Datenaustauschbus 11 und über Adressierungsverbindungen A_{#} bzw. Datenverbindungen D_{#}.

Weitere Geräte können vorgesehen sein, um ein oder mehrere der erwähnten Geräte 1ₙ über ihre zugeordneten Modellierungseinheiten 3ₙ mit unabhängigen Variablen zu speisen. So ist beispielsweise in der Figur ein Datums- und Jahreszeitvorgabe-Gerät 15 vorgesehen, welches, falls notwendig, den Modellierungseinheiten 3ₙ unabhängige Variable, wie Datum, gruppiert nach Werktagen und Feiertagen, Jahreszeiten etc. liefert.

An den Bus 11 ist eine Vermittlungszentraleinheit 17 aufgeschaltet, woran eine oder mehrere Eingabeeinheiten 7₁ bis 7₃, im allgemeinen 7ₘ, eingangsseitig aufgeschaltet sind. Dem erfindungsgemässen Dezentralisierungs-Konzept folgend, werden aber, wie mit ausgezogenen Linien in der Figur dargestellt, jeder Eingabeeinheit 7ₘ vorzugsweise je eine Vermittlungseinheit 17ₘ dezentral zugeordnet. Mit den Eingabeeinheiten 7ₘ - bei denen es sich sowohl um Einheiten mit Visualisierung handeln kann, wie auch um Einheiten ohne, wie Stellpaneel bei 7₄, vorgelagerte Geräte, wie bei 7₅ - werden primär die Geräte 1ₙ beispielsweise in Funktion der momentanen Bedürfnisse gesteuert. Dies erfolgt dadurch, dass mit einer oder mehreren der vorgesehenen Eingabeeinheiten 7ₘ über die zentrale Vermittlungseinheit 17, vorzugsweise die dezentralen 17ₘ durch Adressierung eine der Modellierungseinheiten 3ₙ aufgerufen wird. Der aufgerufenen Einheit kann weiter die Adresse der anrufenden Eingabeeinheit 7ₘ übermittelt werden, oder diese wird mit dem Aufruf identifiziert, und darnach werden von der anrufenden Einheit 7ₘ, als unabhängige Variable, Steuersignale an die Modellierungseinheit 3ₙ übermittelt. Umgekehrt erfolgen Rückmeldungen und Statusmeldungen von der Modellierungseinheit 3ₙ an die mit ihrer Adresse oder durch den Aufruf definierte Eingabeeinheit 7ₘ.

Es ist durchaus möglich, Zugriffskompetenzen festzulegen, welche Eingabeeinheit auf welche Geräte eingreifen darf bzw. welche Eingabeeinheit von welchem Gerät Rückmeldungen erhalten darf. Hierführ werden die Adressen derjenigen Eingabeeinheiten an den Modellierungseinheiten abgespeichert - als Vergleichsbasis für erfolgende Aufrufe - die für die Kommunikation mit dem betrachteten Gerät befugt sind.

Der Adress- und Datenaustausch erfolgt ebenfalls über den Bus 11. Wird, im Betrieb, durch eine der Eingabeeinheiten 7ₘ beispielsweise an das Gerät 1₁ ein Steuerbefehl übermittelt, so adressiert die Eingabeeinheit 7₁ die Modellierungseinheit 3₁ gegebenenfalls gleichzeitig mit Übermittlung ihrer Adresse. Die Modellierungseinheit 3₁ adressiert nun vorerst diejenigen Modellierungseinheiten, im konkreten 3₂ und 3₃, welche Geräten zugeordnet sind, von denen das Gerät 1₁ abhängt. Nach Bereitstellung aller notwendigen, unabhängigen Variablen, also der Steuergrösse von Einheit 7₁, sowie, direkt ermittelt, der Zustände der Geräte 1₂ und 1₃, modelliert die Modellierungseinheit 3₁ die geforderte Ausgangsgrösse A₁ als A_{1M} - die abhängige Variable - und führt das Gerät 1₁ gemäss der ermittelten, abhängigen Variablen A_{1M}.

Weil jedem Gerät 1ₙ unmittelbar zugeordnet eine Modellierungseinheit zugeschaltet ist, welche sein Verhalten vorab modelliert, eignet sich diese Struktur ausgezeichnet, um in regelndem Sinn das Gerät 1₁ nach dem geführten Modell, nun als Führungsmodell wirkend, zu stellen.

Die Konstellation des Systems, insbesondere die Vorgabe der Abhängigkeiten der Geräteausgangsgrössen von unabhängigen Grössen, wird vorzugsweise durch die Eingabeeinheiten 7 an die Modellierungseinheiten eingegeben.

Das gesamte Steuerungsprogramm für die Mehrzahl vorgesehener Geräte wird somit modular verteilt, auf die je den Geräten zugeordneten Modellierungseinheiten. Dabei stehen für die herkömmlich eingesetzten Geräte Standardmodelle zur Verfügung, die bei Konstellation des Gesamtsystems in die jeweiligen Modellierungseinheiten geladen werden und über die Eingabeeinheiten 7ₘ noch angepasst werden. Die jeweiligen Modellierungsprozesse bzw. -programme müssen nicht mehr kompiliert werden.

An allen oder an mehreren der vorgesehenen Eingabeeinheiten 7ₘ können die Zustände der Geräte visualisiert werden, ober aber es können - wie erwähnt - entsprechend vorgegebener Ansteuerungskompetenzen selektionierte Eingabeeinheiten unterschiedliche Visualierungs- und Steuerungskompetenzen haben.

Das erfindungsgemässe Vorgehen eignet sich insbesondere für den Einsatz im Zusammenhang mit Geräten der Haustechnik, wie für klimatechnische Geräte - wie zB. Heiz- oder Kühlgeräte - für beleuchtungstechnische Geräte, Energie-Optimierungsgeräte, Überwachungsgeräte, aber auch im Zusammenhang mit Geräten der Verfahrenstechnik bzw. der Prozessautomation.

## Patentansprüche

1. Verfahren zur Steuerung einer Mehrzahl von Geräten (1), denen je Steuergrössen eingegeben werden, und die, in Funktion davon, eine Ausgangsgrösse (A) erzeugen, bei dem man
• je den Verlauf der Ausgangsgrösse der Geräte, je in Funktion elektrischer Signale, an einer den Geräten je zugeordneten Modellierungseinheit (3) elektrisch nachbildet
• an einer jeweils betrachteten Modellierungseinheit (3) die Adressen derjenigen Modellierungseinheiten (3) abspeichert, welche Geräten (1) zugeordnet sind, deren Ausgangsgrössen die Ausgangsgrösse desjenigen Gerätes (1) beeinflussen, das der betrachteten Modellierungseinheit (3) zugeordnet ist
• bei der Ansteuerung jeweils eines Gerätes (1) über seine Modellierungseinheit (3), zur Aenderung seiner Ausgangsgrösse, den Zustand derjenigen Modellierungseinheiten abfragt, deren Adressen an der betrachteten Modellierungseinheit (3) abgespeichert sind, und je als elektrisches Signal der betrachteten Modellierungseinheit eingibt
• die Ansteuerung jeweils eines Gerätes (1) von einer Eingabeeinheit (7) mit der Adresse der dem Gerät zugeordneten Modellierungseinheit über eine Vermittlungseinheit (17m, 17) vornimmt.

2. Verfahren nach Anspruch 1, dadurch gekennzeichnet, dass man mehrere verteilte Eingabeeinheiten (7ₘ) vorsieht bzw. Anschlüsse hierfür.

3. Verfahren nach einem der Ansprüche 1 oder 2, dadurch gekennzeichnet, dass man an der Eingabeeinheit (7ₘ) oder mindestens einem Teil der Eingabeeinheiten die Adressen der daran aufrufbaren Modellierungseinheiten (3ₙ) abspeichert, an den Modellierungseinheiten (3ₙ) die Adressen derjenigen der Eingabeeinheiten (7ₘ), die von den den jeweiligen Modellierungseinheiten zugeordneten Geräten Rückmeldungen erhalten sollen, und/oder dass man mit Aufrufen einer Modellierungseinheit (7ₘ) die Adresse der aufrufenden Eingabeeinheit an die aufgerufene Modellierungseinheit übermittelt.

4. Verfahren nach einem der Ansprüche 1 bis 3, dadurch gekennzeichnet, dass man die Modellierungseinheiten (3ₙ) ansteuert und diese, als regelnde Führungsmodelle, auf die zugeordneten Geräte (1ₙ) wirken, indem man den Geräte-IST-Zustand an die zugeordnete Modellierungseinheit rückführt.

5. Verfahren nach einem der Ansprüche 1 bis 4, dadurch gekennzeichnet, dass man den Modellierungseinheiten (3ₙ) die das Verhalten des zuzuordnenden Gerätes (1) charakterisierenden Grössen eingibt.

6. Verfahren nach einem der Ansprüche 2 bis 5, dadurch gekennzeichnet, dass man die Verbindung zwischen den Modellierungseinheiten (3ₙ) und den Eingabeeinheiten (7ₘ) über den Eingabeeinheiten je dezentral zugeordnete Vermittlungseinheiten (17ₘ) erstellt.

7. Verfahren nach einem der Ansprüche 1 bis 6, dadurch gekennzeichnet, dass man als Eingabeeinheit (3ₙ) ein vorgelagertes Gerät vorsieht.

8. Gerätesteuersystem mit einer Mehrzahl von Ausgängen für die Steuerung einer Mehrzahl von Geräten denen je Steuergrößen eingegeben werden, und die, in Funktion davon eine Ausgangsgröße erzeugen (1) bei der
• den Ausgängen für die Steuerung der Geräte (1) je eine Recheneinheit (3) vorgeschaltet ist, die, in Funktion eingebbarer elektrischer Signale, den Verlauf einer Ausgangsgrösse des jeweiligen Gerätes elektrisch nachbildet,
• an jeder betrachteten Recheneinheit (3ₙ) eine Speichereinheit (9) für Adressen vorgesehen ist, woran Adressen übriger Recheneinheiten (3ₙ) eingebbar sind, welchen Geräte zugeordnet sind, deren Ausgangsgrössen die Ausgangsgrösse desjenigen Gerätes (1) beeinflussen, das der betrachteten Recheneinheit (3ₙ) nachgeschaltet ist,
• Mittel vorgesehen sind, so daß bei der Ansteuerung jeweils eines Gerätes (1) über seine Recheneinheit (3), zur Aenderung seiner Ausgangsgrösse, den Zustand derjenigen Recheneinheiten abfragt, deren Adressen an der betrachteten Recheneinheit (3) abgespeichert sind, und je als elektrisches Signal der betrachteten Recheneinheit eingibt,
• die Recheneinheiten (3ₙ) untereinander über eine direkte Adressierungs- und Datenverbindung (11) verbunden sind, und
• eine Eingabeeinheit (7) über eine ihr nachgeschaltete Vermittlungseinheit (17ₘ, 17) und die Daten- und Adressierungsverbindung (11) den Recheneinheiten (3ₙ) vorgeschaltet ist.

9. Gerätesteuersystem nach Anspruch 8, dadurch gekennzeichnet, dass mehrere Eingabeeinheiten (7ₘ) vorgesehen sind und mindestens einem Teil der Eingabeeinheiten (7ₘ) einerseits sowie den Recheneinheiten (3ₙ) anderseits eine zentrale Vermittlungseinheit (17) zwischengeschaltet ist und/oder mindestens ein Teil der Eingabeeinheiten ihnen je zugeordnete, dezentrale Vermittlungseinheiten (17ₘ) hierfür aufweist.

10. Gerätesteuersystem nach einem der Ansprüche 8 oder 9, dadurch gekennzeichnet, dass mindestens ein Teil der vorgesehen Recheneinheiten (3ₙ) im wesentlichen gleich aufgebaut sind und die Modellierung der zugeordneten Prozesse durch Eingaben an die Recheneinheiten erfolgt.

11. Gerätesteuersystem nach einem der Ansprüche 8 bis 10, dadurch gekennzeichnet, dass die Recheneinheiten (3ₙ) als Führungseinheiten für die Geräte eingesetzt sind und vorzugsweise Übereinstimmung des Gerätezustandes und des nachgebildeten Zustandes mittels am Gerät vorgesehener Messwertaufnehmer erfolgt, deren Ausgänge auf die zugeordnete Recheneinheit rückgeführt sind.

12. Verwendung des Verfahrens nach einem der Ansprüche 1 bis 7 oder des Gerätesteuersystems nach einem der Ansprüche 8 bis 11 für Geräte der Haustechnik, insbesondere für klimatechnische Geräte wie Heiz- oder Kühlgeräte, beleuchtungstechnische Geräte, Energie-Optimierungsgeräte, Überwachungsgeräte.

13. Verwendung des Verfahrens nach einem der Ansprüche 1 bis 7 oder des Gerätesteuersystems nach einem der Ansprüche 8 bis 11 für die Verfahrenstechnik.

14. Verwendung des Verfahrens nach einem der Ansprüche 1 bis 7 oder des Gerätesteuersystems nach einem der Ansprüche 8 bis 11 für die Prozessautomation.

## Claims

1. Process for controlling a plurality of apparatus (1) to which corresponding control values are input and which, as a function thereof, generate an output value (A), wherein
• the progression of the output values of the apparatus is electrically reproduced in each case, as a function of electric signals, on a modelling unit (3) associated with each of the apparatus ;
• the addresses of the modelling units (3) that are associated with apparatus (1) the output values of which influence the output value of the apparatus (1) that is associated with a given modelling unit (3) are stored in the modelling unit (3) concerned ;
• when a given apparatus (1) is triggered via its modelling unit (3), to modify its output value, the status of the modelling units the addresses of which are stored in the modelling unit (3) concerned is queried, and input to the modelling unit concerned as an electric signal ;
• a given apparatus (1) is triggered from a input unit (7) with the address of the modelling unit associated with the apparatus via a switching unit (17m, 17).

2. Process according to claim 1, characterised in that several distributed input units (7ₘ) and connections therefor are provided.

3. Process according to claim 1 or 2, characterised in that the addresses of the modelling units (3ₙ) that can be called thereat are stored at the input unit (7ₘ), or at least a part of the input units, and the addresses of the input units (7ₘ) that are to receive acknowledgements from the apparatus that are associated with the corresponding modelling units are stored at the modelling units (3ₙ), and/or in that, when a modelling unit (7ₘ) is called, the address of the calling input unit is transmitted to the called modelling unit.

4. Process according to one of claims 1 to 3, characterised in that the modelling units (3ₙ) are triggered and these, as regulating guide models, act on the associated apparatus (1ₙ), as a result of the actual status of the apparatus being fed back to the associated modelling unit.

5. Process according to one of claims 1 to 4, characterised in that the values characterising the behaviour of the apparatus (1) to be associated are input to the modelling units (3ₙ).

6. Process according to one of claims 2 to 5, characterised in that the connection between the modelling units (3ₙ) and the input units (7ₘ) is established via switching units (17ₘ) associated in a decentralised fashion with the input units.

7. Process according to one of claims 1 to 6, characterised in that an upstream apparatus is provided as an input unit (3ₙ).

8. Apparatus control system with a plurality of outputs for controlling a plurality of apparatus (1), to which respective control values are input and which, as a function thereof, generate an output value, wherein :
• a computing unit (3) is provided upstream of each of the outputs for controlling the apparatus (1), which unit electrically reproduces the progression of an output value of the apparatus concerned as a function of inputtable electric signals ;
• at each computing unit (3ₙ) concerned, there is provided a storage unit (9) for addresses to which can be input addresses of other computing units (3ₙ) with which are associated apparatus the output values of which influence the output value of the apparatus (1) that is connected downstream of the computing unit (3n) concerned ;
• means are provided so that, when a given apparatus (1) is triggered, via its computing unit (3), to modify its output value, the status of the computing units the addresses of which are stored at the computing unit (3) concerned, is queried, and input to the computing unit concerned as an electric signal ;
• the computing units (3ₙ) are connected to one another via a direct addressing and data connection (11); and
• an input unit (7) is connected upstream of the computing units (3ₙ) via a switching unit (17ₘ, 17) connected downstream of it and the data and addressing connection (11).

9. Apparatus control system according to claim 8, characterised in that several input units (7m) are provided and a central switching unit (17) is interposed between at least a part of the input units (7ₘ), on one hand, and the computing units (3ₙ), on the other hand, and/or at least a part of the input units has decentralised switching units (17ₘ) associated therewith for this purpose.

10. Apparatus control system according to one of claims 8 or 9, characterised in that at least a part of the computing units (3ₙ) provided are essentially constructed in the same way and the associated processes are modelled by inputs to the computing units.

11. Apparatus control system according to one of claims 8 to 10, characterised in that the computing units (3ₙ) are used as guide units for the apparatus and, preferably, correspondence between the status of the apparatus and the reproduced status is obtained by means of measured value sensors provided at the apparatus, the outputs of which are fed back to the associated computing unit.

12. Use of the process according to one of claims 1 to 7, or of the apparatus control system according to one of claims 8 to 11 for domestic appliances, in particular for environmental conditioning apparatus such as heating or cooling apparatus, lighting apparatus, energy optimising apparatus or monitoring apparatus.

13. Use of the process according to one of claims 1 to 7, or of the apparatus control system according to one of claims 8 to 11, for industrial processing engineering.

14. Use of the process according to one of claims 1 to 7, or of the apparatus control system according to one of claims 8 to 11, for process automation.

## Revendications

1. Procédé pour commander plusieurs appareils (1) auxquels sont fournies en entrée des grandeurs de commande respectives et qui, en fonction de celles-ci, génèrent une grandeur de sortie (A), selon lequel
• on reproduit électriquement l'évolution de chaque grandeur de sortie des appareils, en fonction de signaux électriques, au niveau d'une unité de modélisation (3) associée à chaque appareil,
• au niveau d'une unité de modélisation (3) considérée, on met en mémoire les adresses des unités de modélisation (3) qui sont associées à des appareils (1) dont les grandeurs de sortie influencent la grandeur de sortie de l'appareil (1) associé à l'unité de modélisation (3) considérée,
• lors du déclenchement d'un appareil (1) par l'intermédiaire de son unité de modélisation (3), on consulte, pour modifier sa grandeur de sortie, l'état des unités de modélisation dont les adresses sont stockées dans l'unité de modélisation (3) considérée, et on fournit en entrée cet état sous la forme d'un signal électrique à l'unité de modélisation considérée, et
• on procède au déclenchement d'un appareil (1) à partir d'une unité d'entrée (7) avec l'adresse de l'unité de modélisation associée à l'appareil, par l'intermédiaire d'une unité de commutation (17ₘ, 17).

2. Procédé selon la revendication 1, caractérisé en ce qu'on prévoit plusieurs unités d'entrée (7ₘ) réparties, et plusieurs raccordements pour celles-ci.

3. Procédé selon la revendication 1 ou 2, caractérisé en ce qu'on met en mémoire dans l'unité d'entrée (7ₘ) ou dans une partie au moins des unités d'entrée les adresses des unités de modélisation (3ₙ) aptes à être appelées au niveau de ces unités d'entrée, et dans les unités de modélisation (3ₙ) les adresses des unités d'entrée (7ₘ) qui doivent recevoir des accusés de réception des appareils associés aux unités de modélisation respectives, et/ou en ce que, lorsqu'une unité de modélisation (7ₘ) est appelée, on transmet à l'unité de modélisation appelée l'adresse de l'unité d'entrée qui appelle.

4. Procédé selon l'une des revendications 1 à 3, caractérisé en ce qu'on déclenche les unités de modélisation (3ₙ) et celles-ci, comme modèles pilotes de régulation, agissent sur les appareils (1ₙ) associés du fait qu'on réinjecte l'état réel des appareils dans l'unité de modélisation associée.

5. Procédé selon l'une des revendications 1 à 4, caractérisé en ce qu'on fournit en entrée aux unités de modélisation (3ₙ) les grandeurs qui caractérisent le comportement de l'appareil (1) à associer.

6. Procédé selon l'une des revendications 2 à 5, caractérisé en ce qu'on établit la liaison entre les unités de modélisation (3ₙ) et les unités d'entrée (7ₘ) par l'intermédiaire d'unités de commutation (17ₘ) associées de manière décentralisée aux unités d'entrée.

7. Procédé selon l'une des revendications 1 à 6, caractérisé en ce qu'on prévoit comme unité d'entrée (3ₙ) un appareil monté en amont.

8. Système de commande d'appareils comportant plusieurs sorties pour commander plusieurs appareils (1) auxquels sont fournies en entrée des grandeurs de commande respectives et qui, en fonction de celles-ci, génèrent une grandeur de sortie, dans lequel
• on prévoit, en amont de chacune des sorties pour commander les appareils (1), une unité de calcul (3) qui, en fonction de signaux électriques aptes à être fournis en entrée, reproduit électriquement l'évolution d'une grandeur de sortie de l'appareil correspondant,
• il est prévu au niveau de chaque unité de calcul (3ₙ) considérée une unité de mémoire (9) pour des adresses, dans laquelle peuvent être introduites des adresses d'autres unités de calcul (3ₙ) auxquelles sont associés des appareils dont les grandeurs de sortie influencent la grandeur de sortie de l'appareil (1) monté en aval de l'unité de calcul (3ₙ) considérée,
• il est prévu des moyens pour, lors du déclenchement d'un appareil (1) par l'intermédiaire de son unité de calcul (3), consulter, en vue de modifier la grandeur de sortie de celui-ci, l'état des unités de calcul dont les adresses sont stockées dans l'unité de calcul (3) considérée, et l'introduire sous la forme d'un signal électrique dans l'unité de calcul considérée,
• les unités de calcul (3ₙ) sont reliées entre elles par l'intermédiaire d'une liaison d'adressage et de données directe (11), et
• une unité d'entrée (7) est montée en amont des unités de calcul (3ₙ) par l'intermédiaire d'une unité de commutation (17ₘ, 17) montée en aval de ladite unité d'entrée (7), et de la liaison de données et d'adressage (11) .

9. Système de commande d'appareils selon la revendication 8, caractérisé en ce que plusieurs unités d'entrée (7ₘ) sont prévues et une unité de commutation centrale (17) est montée entre une partie au moins des unités d'entrée (7ₘ), d'une part, et les unités de calcul (3ₙ), d'autre part, et/ou certaines au moins des unités d'entrée comportent des unités de commutation décentralisées qui leur sont associées.

10. Système de commande d'appareils selon la revendication 8 ou 9, caractérisé en ce que certaines au moins des unités de calcul (3ₙ) prévues ont globalement la même structure, et la modélisation des processus associés se fait grâce à des entrées dans des unités de calcul.

11. Système de commande d'appareils selon l'une des revendications 8 à 10, caractérisé en ce que les unités de calcul (3ₙ) sont utilisées comme unités pilotes pour les appareils et, de préférence, une concordance de l'état des appareils et de l'état reproduit est obtenue grâce à des capteurs de valeurs de mesure qui sont prévus au niveau des appareils et dont les sorties sont réinjectées dans l'unité de calcul associée.

12. Utilisation du procédé selon l'une des revendications 1 à 7 ou du système de commande d'appareils selon l'une des revendications 8 à 11 pour des appareils domestiques, en particulier pour des appareils de climatisation tels que des appareils de chauffage ou de refroidissement, des appareils d'éclairage, des appareils d'optimisation d'énergie, des appareils de surveillance.

13. Utilisation du procédé selon l'une des revendications 1 à 7 ou du système de commande d'appareils selon l'une des revendications 8 à 11 pour la technique des procédés industriels.

14. Utilisation du procédé selon l'une des revendications 1 à 7 ou du système de commande d'appareils selon l'une des revendications 8 à 11 pour l'automatisation des processus industriels.
